# EUROPEAN PATENT APPLICATION

(11) **EP 3 477 572 A1**
(43) Date of publication of application: **01.05.2019**
(21) Application number: 17199424.7
(22) Date of filing: 31.10.2017
(51) Int. Cl.: G06Q 20/38, G06Q 20/32

(54) **OFFLINE ONLY TERMINAL OPERATION METHOD AND SYSTEM**

(71) Applicant: Mastercard International Incorporated, Purchase NY 10577 (US)
(72) Inventor: NOE, James, West Wickham, BR4 0BL (GB); TIERNEY, John, Merseyside, Cheshire CH60 7TF (GB); ROBERTS, David A., Warrington, Cheshire WA4 5RD (GB)
(74) Representative: Gill Jennings & Every LLP

(57) **Abstract**

The present disclosure generally relates to methods and systems for performing operations with an offline only terminal, particularly where the device being used is only capable of performing online operations. According to one aspect there is provided a method, at a mobile device, of interacting with an offline only terminal, the method comprising the steps of: generating an authorisation request; sending the authorisation request to a remote computer system via a telecommunications network; receiving an authorisation response from the remote computer system, via a telecommunications network, the authorisation response comprising data for enabling generation of an approval certificate for an offline operation; receiving a request for the approval certificate for an offline operation from the offline only terminal; generating an approval certificate for an offline operation based on the data; and sending the approval certificate for an offline operation to the offline only terminal.

## Description

### Field

The present invention relates generally, but not exclusively, to methods and systems capable of interacting with offline only terminals.

### Background

Conventional mobile devices, such as mobile phones and wearable contactless devices (such as watches), typically require transactions to be carried out using a payment application on the mobile device, and require an online transaction authorisation to be performed. This means that the terminal at which the mobile phone is presented to perform a transaction must be an online capable terminal.

Offline only terminals are commonly used in vending machines, toll booths, parking meters or parking ticket issuing machines, as well as on ships, aeroplanes, trains and in other environments where it is not practical or possible to provide a terminal with online capabilities. Similarly, there may be instances where a terminal that is normally capable of performing online authorisations is temporarily unable to do so, for example it may have a temporary network issue that prevents it from being able to perform the authorisation.

The issuer action codes (IACs) on conventional mobile devices are configured such that, when a user attempts to perform a transaction at an offline only terminal using the mobile device, the transaction is automatically declined and an application authentication cryptogram (AAC) is generated by the mobile device and transmitted to the terminal.

As such, a user of a mobile device configured in this way is limited in that transactions using the mobile device can only be carried out at terminals with online transaction processing capabilities. Accordingly, there is a need for a method and system which enables mobile devices to be used to perform transactions at offline only terminals.

### Summary

According to a first aspect there is provided a method, at a mobile device, of interacting with an offline only terminal, the method comprising the steps of: generating an authorisation request; sending the authorisation request to a remote computer system via a telecommunications network; receiving an authorisation response from the remote computer system, via a telecommunications network, the authorisation response comprising data for enabling generation of an approval certificate for an offline operation; receiving a request for the approval certificate for an offline operation from the offline only terminal; generating an approval certificate for an offline operation based on the data; and sending the approval certificate for an offline operation to the offline only terminal.

The data can permit the generation of the approval certificate for an offline operation for a predetermined period of time and/or in relation to predetermined categories of operations and/or in relation to a predetermined maximum number of operations.

The data can permit overriding of issuer action codes at the mobile device, wherein the step of generating the approval certificate for an offline operation can comprise overriding issuer action codes at the mobile device so as to enable the approval certificate for an offline operation to be generated.

The data can permit counters and/or accumulators of the mobile device to be overwritten.

The data can comprise a temporary RSA key and/or a temporary integrated circuit card public key certificate for generating the approval certificate for an offline operation, wherein the step of generating the approval certificate for an offline operation can comprise generating the approval certificate for an offline operation using the temporary RSA key and/or the temporary integrated circuit card public key certificate.

The step of generating an authorisation request can be performed before the request for the approval certificate for an offline operation is received.

The step of generating an authorisation request can be performed after the step of receiving a request for the approval certificate for an offline operation from the offline only terminal.

The authorisation request can be generated based on the received request for the approval certificate for an offline operation.

The mobile device can remain connected to the offline only terminal while the steps of receiving a request for the approval certificate for an offline operation from the offline only terminal and sending the approval certificate for an offline operation to the offline only terminal are carried out.

According to a second aspect there is provided a method, at a computer system, of enabling a mobile device interaction with an offline only terminal, the method comprising the steps of: receiving an authorisation request from a remote mobile device, via a telecommunications network; approving the authorisation request; and sending an authorisation response to the remote mobile device, via a telecommunications network, the authorisation response comprising data for enabling generation of an approval certificate for an offline operation.

The data can comprise a temporary RSA key and/or a temporary integrated circuit card public key certificate for generating the approval certificate for an offline operation.

The data can permit overriding of issuer action codes at the remote mobile device.

The step of approving the authorisation request can comprise communicating with an issuer computer system in order to obtain approval.

According to a third aspect there is provided a mobile device comprising: a memory; a processor; an authorisation module configured to generate an authorisation request and process an authorisation response; a telecommunication module configured to send the authorisation request to a remote computer system and to receive the authorisation response from the remote computer system, the authorisation response comprising data for enabling generation of an approval certificate for an offline operation; a terminal communication module configured to receive a request for an approval certificate for an offline operation from an offline only terminal and to send an approval certificate for an offline operation to the offline only terminal; and an approval certificate generating module configured to process the request for an approval certificate for an offline operation and generate the approval certificate for an offline operation based on the data.

According to a fourth aspect there is provided a telecommunication system comprising: the mobile device of the third aspect; and a computer system remote from the mobile device, the computer system comprising: a computer system telecommunication module configured to receive an authorisation request from a mobile device and to send an authorisation response to the mobile device comprising data for enabling generation of an approval certificate for an offline operation; and an authorisation request approving module for approving, or obtaining approval of, the authorisation request.

### Brief Description of Drawings

Embodiments will now be described, by way of example only, with reference to the accompanying drawings, in which:
Figure 1 schematically illustrates an example system;
Figure 2 schematically illustrates an example mobile device;
Figure 3 is a flowchart of an example method carried out at a mobile device;
Figure 4 is a flowchart of another example method carried out at a mobile device;
Figure 5 is a flowchart of an example method carried out at a computer system; and
Figure 6 schematically illustrates an example computer system.

### Detailed Description

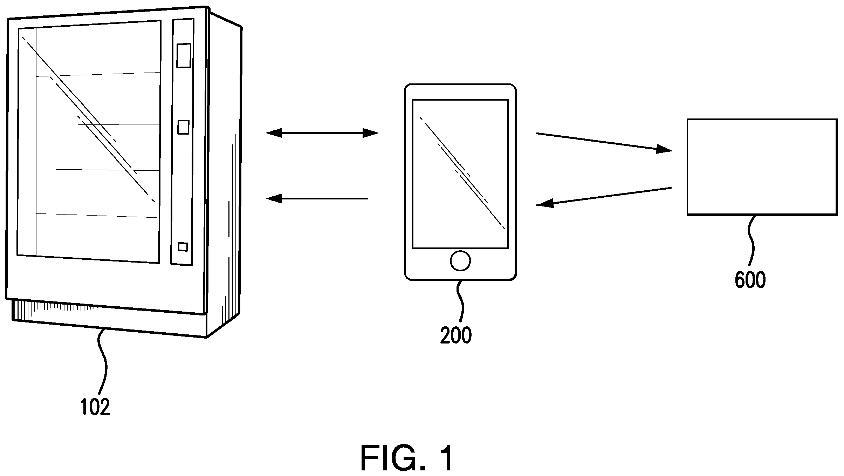

Figure 1 depicts a representation of the components in a system suitable for carrying out the method described herein.

The system comprises a mobile device 200, an offline only terminal 102, and a computer system 600.

The mobile device 200 may be, for example, a smartphone, tablet, laptop, smartwatch, or any mobile electronic device with the appropriate functionality.

The computer system 600 may be an issuer computer system. Alternatively, the computer system 600 may be an intermediary computer system in further communication with an issuer computer system, for example, one of: a merchant computer system; an acquirer computer system; or a payment processing service provider computer system.

There are two connections between the components of the system depicted in Figure 1. The mobile device 200 is in communication with the computer system 600 via a telecommunications or local area network, such as a WiFi network. The mobile device 200 is in communication with the offline only terminal 102 via a wireless connection, such as a near-field communication (NFC) connection. In some implementations, it would be possible for all or part of the computer system 600 to be incorporated within the mobile device 200.

The mobile device 200 and the computer system 600 are typically remote from one another in contrast to the mobile device 200 and the offline only terminal 102 which are close to one another.

The mobile device 200 is configured to perform an operation with the offline only terminal 102 by generating an authorisation request and sending the authorisation request to the computer system 600 via the telecommunications network. The mobile device 200 then receives an authorisation response from the computer system 600, again via the telecommunications network. The authorisation response comprises data for enabling generation of an approval certificate for an offline operation. The mobile device 200 then receives a request for an approval certificate for an offline operation from the offline only terminal 102 via the wireless connection. In response, the mobile device 200 generates an approval certificate for an offline operation based on the data and sends the approval certificate to the offline only terminal 102, again via the wireless connection.

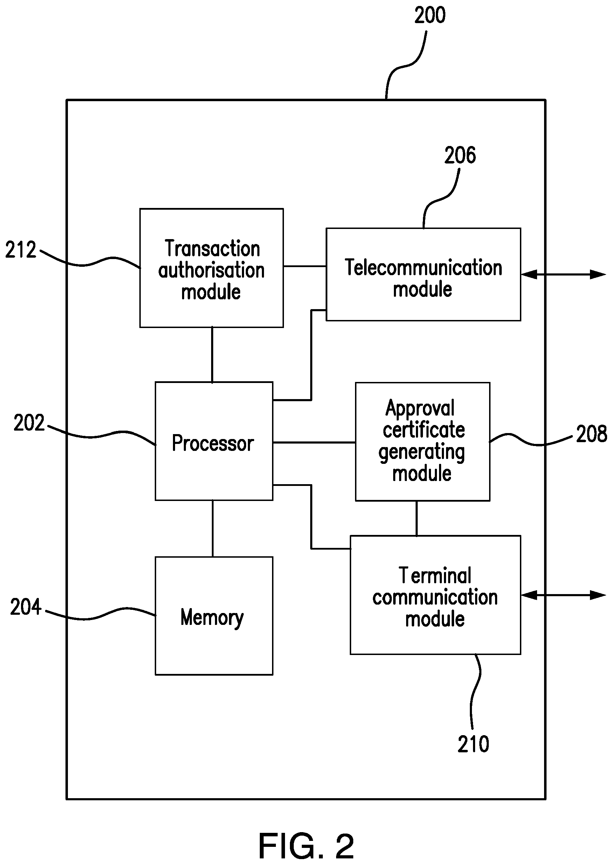

Figure 2 depicts components of the mobile device 200 shown in Figure 1, according to an example in which the operation to be authorised is a transaction. The mobile device 200 comprises a processor 202 which is in communication with a memory 204, a telecommunication module 206, an approval certificate generating module 208, a terminal communication module 210, and a transaction authorisation module 212. The mobile device also comprises a graphical user interface (GUI) (not shown) in communication with the processor. A user of the mobile device is able to input commands to and receive instructions from the mobile device 200 via the GUI.

The processor 202 controls the operation of the mobile device 200 by issuing commands to the various components of the mobile device 200 to perform operations.

The memory 204 comprises a secure memory for securely storing data.

The telecommunication module 206 is suitable for establishing the connection between the mobile device 200 and the computer system 600, across which messages and other data can be sent.

The terminal communication module 210 is suitable for establishing the connection between the mobile device 200 and the offline only terminal 102, across which messages and other data can be sent.

The approval certificate generating module 208 is in communication with the terminal communication module 210 and is configured to generate an approval certificate, such as a transaction certificate or its equivalent under similar payment application specifications, for an offline transaction which can then be sent to the terminal 102 by the terminal communication module 210.

The approval certificate is used to approve a transaction offline. The approval certificate may be in the form of a cryptogram. The approval certificate generating module 208 is also configured to process a received approval certificate request.

The transaction authorisation module 212 is in communication with the telecommunication module 206 and is configured to generate a transaction authorisation request which is sent to the computer system 600 by the telecommunication module 206.

A Mobile Payment Application (MPA) may be installed on the mobile device 200 and may be responsible for detecting when a terminal is offline only, and subsequently performing one or more of the actions detailed in this application in order to allow the transaction to be completed successfully.

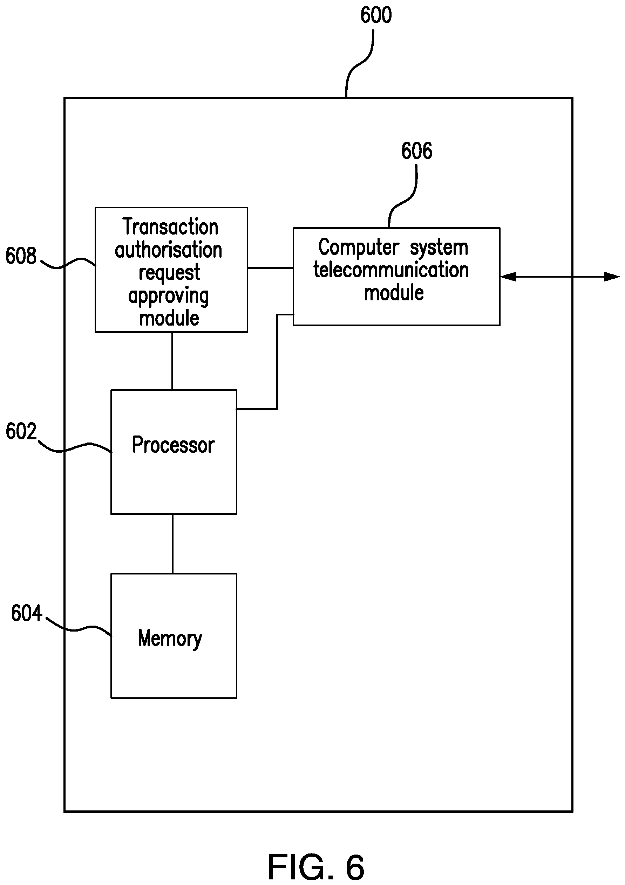

Figure 6 depicts the computer system 600 shown in Figure 1. The computer system 600 comprises a computer system processor 602 which is in communication with a computer system memory 604, a computer system telecommunication module 606, and a transaction authorisation request approving module 608.

The computer system telecommunication module 606 is configured to receive a transaction authorisation request from a mobile device 200 and to send a transaction authorisation response to the mobile device 200 comprising data for enabling generation of an approval certificate for an offline transaction.

The transaction authorisation request approving module 608 is configured to obtain approval of the transaction authorisation request, typically where the computer system 600 is an intermediary computer system, and/or to approve the transaction authorisation request, typically where the computer system 600 is an issuer computer system.

The processor 602 controls the operation of the computer system 600 by issuing commands to the various components of the computer system 600 to perform operations.

It is also possible that all or part of the services provided by the computer system 600 may be incorporated in the mobile device 200. For example, the mobile device 200 may include an application that simulates a merchant computer system.

The computer system 600 is able to provide the data required by the mobile device 200 in order to complete an offline transaction, either by locally generating the data and sending it to the mobile device 200 or by first obtaining the data from another computer system, such as an issuer computer system, and sending the data on to the mobile device 200.

An issuer will approve the offline transaction using conventional processes. As outlined above, the issuer is either the computer system 600 itself, and is in direct communication with the mobile device 200, or the computer system 600 acts as an intermediary between the mobile device 200 and the issuer.

The data required by the approval certificate generating module 208 in order to generate and approval certificate may be generated by an issuer. Alternatively, the data may be generated by one or more of: a tokenisation engine; a card scheme; a payment system; a personalisation bureau; an over the air personalisation system; a trusted service provider; a mobile configuration management system; or any other third party acting on the issuer's behalf.

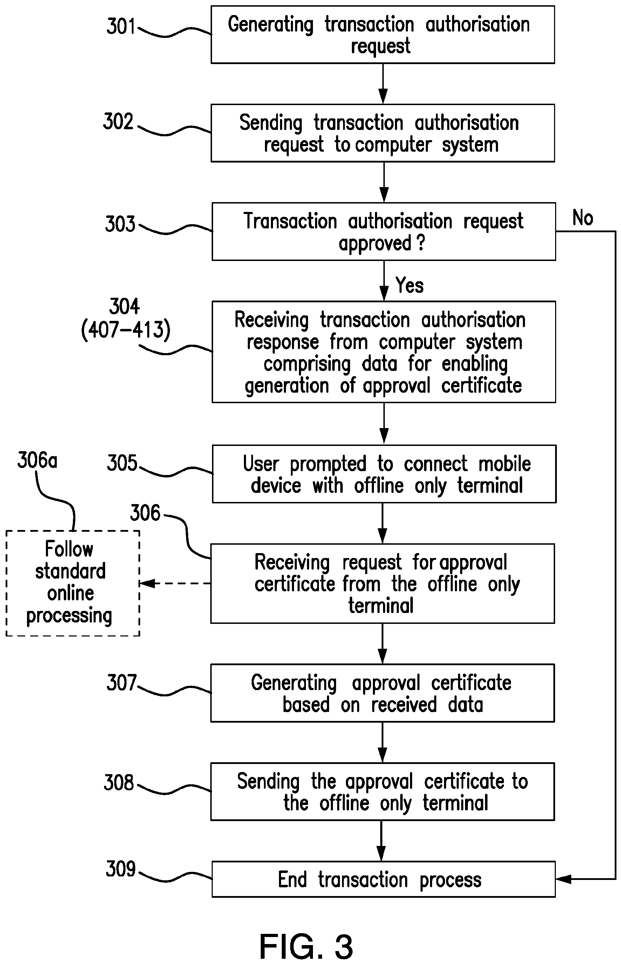

Figure 3 is a process flow diagram which depicts steps carried out at the mobile device 200 in an embodiment where a transaction authorisation request approval is obtained before the mobile device 200 is presented at the offline terminal 102.

At step 301, the transaction authorisation module 212 generates a transaction authorisation request. The transaction authorisation request comprises a cryptogram, such as the pre-authorisation request specified by conventional card schemes, such as Mastercard™ and VISA™. Such a request may be initiated, for example, by the user of the mobile device 200 via the GUI.

At step 302, the transaction authorisation request is sent to the computer system 600 by the telecommunication module 206. The authorisation may be a normal authorisation, a final authorisation or a pre-authorisation

At step 303, if the transaction authorisation request has not been approved, notification of this is received from the computer system 600 via the telecommunication module 206 and step 309 is carried out and the transaction process is ended. If the transaction authorisation request has been approved, then step 304 is carried out.

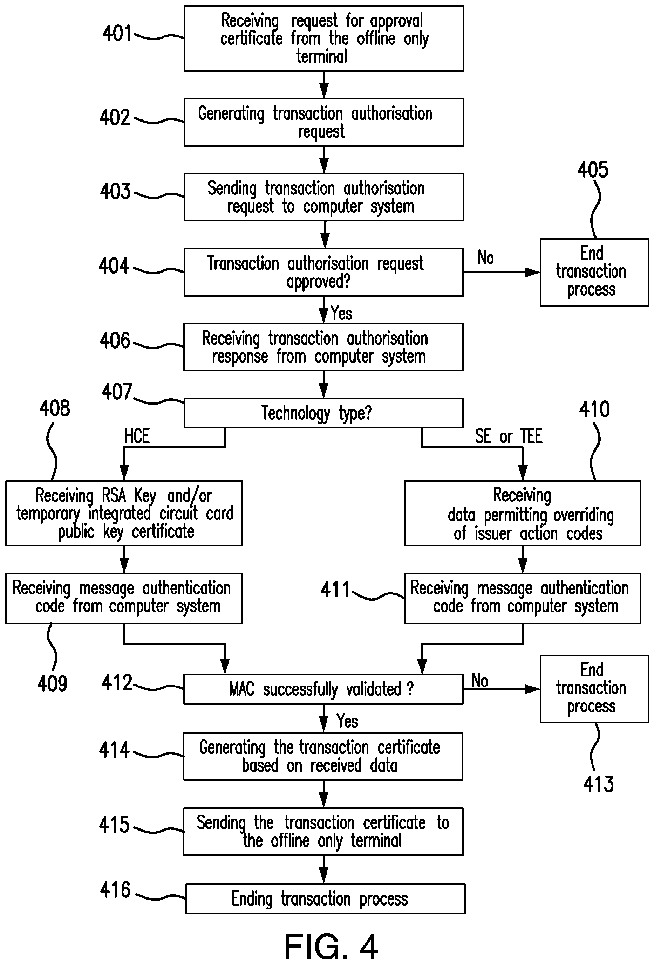

At step 304, the telecommunication module 206 receives a transaction authorisation response from the computer system 600 which is processed by the transaction authorisation module 212. The transaction authorisation response comprises data for enabling generation of an approval certificate for an offline transaction. The nature of this data will be described in greater detail in the discussion of Figure 4. At this point, steps 407 to 413 are carried out by the method of this embodiment (i.e. the steps are the same for both this method and the method in Figure 4).

At step 305, the user is informed that they may now use the mobile device 200 with the offline only terminal 102. This may comprise notifying the user via the GUI.

The user then connects the mobile device 200 to the offline only terminal 102. This may comprise tapping the mobile device 200 at the offline only terminal 102 or holding the mobile device 200 within the vicinity of the offline only terminal 102.

At step 306, the terminal communication module 210 receives a request for an approval certificate for an offline transaction from the offline only terminal 102. This may be in the form of a request to generate an application cryptogram (AC).

If, alternatively, the request for an approval certificate were for an approval certificate that indicates that the transaction may be processed online, then step 306a is carried out and standard online processing ensues.

However, where the request for an approval certificate indicates that only offline processing is possible, then the request for an approval certificate for an offline transaction is processed by the approval certificate generating module 208.

At step 307, the approval certificate generating module 208 generates an approval certificate for an offline transaction based on the data received at step 304.

The approval certificate may be in the form of a transaction certificate (TC), or its equivalent under similar payment application specifications, for an offline transaction.

In an example embodiment, step 307 can only be carried out under the condition that the transaction passes requisite tests carried out by the mobile device 200. For example, if the transaction authorisation request generated in step 301 permitted only a single transaction up to a maximum of £5.00 and the transaction to be carried out with the terminal 102 was for £6.00, then the transaction would be declined, and the approval certificate generated would be an Application Authentication Cryptogram (AAC).

Further, if the transaction authorisation request generated in step 301 permitted a transaction to be performed only within a predetermined period or window of time and the user attempts to connect the mobile device 200 to the offline only terminal 102 so as to perform a transaction outside of the predetermined period or window, then the transaction would be declined, and the approval certificate generated would be an Application Authentication Cryptogram (AAC).

Further, if the authorisation request generated in step 301 permitted only a predetermined maximum number of transactions to be performed, say three, and the user attempts to connect the mobile device 200 to the offline only terminal 102 so as to perform a transaction after the maximum number of transactions has been exceeded, e.g. the user attempts to perform a fourth transaction, then the transaction would be declined, and the approval certificate generated would be an Application Authentication Cryptogram (AAC).

At step 308, the terminal communication module 210 sends the approval certificate to the offline only terminal 102 to complete the transaction.

At step 309, the transaction process is ended.

Figure 4 is a process flow diagram which depicts steps carried out at the mobile device 200 in an embodiment where a transaction authorisation request approval is obtained after the mobile device 200 is presented at the offline terminal 102 during the transaction process. The nature of the data received from the computer system 600 is also shown in greater detail. The precise details of the steps may vary based upon the version of the reader software implemented in the offline only terminal 102, and the individual card scheme (such as Mastercard™ or VISA™) which is being used.

At step 401, the user connects the mobile device 200 with the offline only terminal 102 and the terminal communication module 210 receives a request for an approval certificate for an offline transaction from the offline only terminal 102.

When the mobile device 200 receives the request, it determines that it is not configured to allow such a transaction, and consequently determines that an approval from the issuer is required. When this determination is made, step 402 is subsequently carried out.

At step 402, the transaction authorisation module 212 generates a transaction authorisation request. This may, or may not be with the user's knowledge (for example it may happen in the background, or information may be displayed on the GUI informing the user what is happening and what steps are to be taken next). The transaction authorisation request may comprise the received request for an approval certificate itself or data obtained from the request for an approval certificate.

At step 403, the transaction authorisation request (which may be a normal authorisation, a final authorisation or a pre-authorisation) is sent to the computer system 600 by the telecommunication module 206.

At step 404, if the transaction authorisation request has not been approved, then notification of this is received from the computer system 600 via the telecommunication module 206, step 405 is carried out and the transaction process is ended. If the transaction authorisation request has been approved, step 406 is carried out.

At step 406, the telecommunication module 206 receives a transaction authorisation response from computer system 600 which is processed by transaction authorisation module 212. The transaction authorisation response comprises data for enabling generation of an approval certificate for an offline transaction (such as a transaction certificate (TC)).

At step 407, the received data (both in this embodiment and the embodiment of Figure 3, in which steps 407 to 413 are also carried out between steps 304 and 305) depends on the nature of the technology used by the mobile device 200. If the technology used by the mobile device 200 is Host Card Emulation (HCE) based, steps 408 and 409 are carried out. If the technology used by the mobile device 200 is secure element (SE) or trusted execution environment (TEE) based, steps 410 and 411 are carried out. Other technologies may use similar steps, one of the sets of steps 408 and 409 or 410 and 411, or a combination of both sets of steps.

In order to be able to perform an offline transaction with the offline only terminal 102, the mobile device requires a key (such as an RSA key) and a certificate that points to a key (such as temporary ICC public key certificate). The certificate is a signature on data. The data conventionally comprises issuer action codes (IACs) as well as application data, which may be transaction-dependent data. The data is conventionally known as a record.

The offline only terminal 102 can analyse the signature to verify the authenticity of the data which has been signed. Read record commands at the offline only terminal 102 are used to read the signed data of the certificate.

At step 408, the telecommunication module 206 receives an RSA key and/or a temporary integrated circuit card (ICC) public key certificate from the computer system 600 which are then processed by the transaction authorisation module 212. The RSA key and the temporary ICC public key certificate are preferably sent separately. If the mobile device 200 is already in possession of an RSA key, only the certificate is sent.

Preferably, any RSA key stored on the mobile device 200 is periodically replaced with a new RSA key.

The RSA key and the temporary ICC public key certificate may be configured such that they can only be used for a predetermined period of time and/or in relation to transactions up to a predetermined maximum value and/or in relation to a predetermined maximum total number of transactions.

At step 409, the telecommunication module 206 receives a message from computer system 600 comprising a message authentication code (MAC), i.e. a cryptographic value which can be used by the mobile device 200 to determine that the associated data has not been corrupted. The message also comprises the RSA key and/or the temporary ICC public key certificate together with conditions for their use. For example, whilst Issuer Action Codes would be signed in the certificate and can be limited to just one day, a replacement record (i.e. replacement data, such as IACs) with the date in it is also required.

The telecommunication module 206 may also receive a sequence counter from computer system 600. The provision of a sequence counter ensures replay protection is provided as it prevents replays of old messages being used. For example, the mobile device 200 (e.g. software installed on the mobile device 200 such as an MPA) may refuse any received message with a sequence counter less than or equal to the last cryptographically correct one it saw.

The use of a MAC protects against communications security failures and attacks. Preferably, the MAC covers everything that is sent in the message and also a sequence counter.

Messages received by the telecommunication module 206 also contain an instruction on what to do when conditions of use are reached (e.g. instructions to delete, revert to previous configuration and/or change to a new configuration may also be contained in the received message).

At step 410, the telecommunication module 206 receives data permitting overriding of issuer action codes.

There are two sets of issuer action codes which may be overridden, the Issuer Action Codes (IACs), that are part of the temporary ICC public key certificate for all SE/HCE/TEE cases, and the Card Issuer Action Codes (CIACs), which control what the SE/TEE/HCE applications do. Either or both of these may be overridden.

Where the IACs are to be overridden, the data permitting the override is sent along with the temporary ICC public key certificate. Preferably, the configuration of the mobile device 200 would be such that the changeable data (IACs, expiry date) would be split into a different record to the remaining unchanged signed data as there are efficiency benefits associated with transmitting changed and unchanged data to the mobile device 200 as separate pieces of data in the form of different records.

The data permitting overriding of issuer action codes may be configured such that it can only be used for a predetermined period of time (known as the expiry date) and/or in relation to transactions up to a predetermined maximum value and/or in relation to a predetermined maximum total number of transactions.

The data permitting overriding of issuer action codes may be capable of configuring the terminal risk management parameters to constrain the number of offline transactions (for example, to 1 or 2 or more transactions) or of setting the certificate expiry date to the current date to constrain its use to just one day. The data permitting overriding of issuer action codes may be configured to set the Issuer Action Codes that are signed in the temporary ICC public key certificate to produce the desired behavior.

The predetermined maximum total number of transactions could be implemented by the provision of a new counter or, alternatively, an existing offline counter could be used which could be cleared and the limit set to the desired number.

EMV contains a terminal risk management mechanism for velocity checking (a frequency check, in which payment transactions are reviewed for repeating patterns within a defined period). If the signed data in the temporary ICC public key certificate contains a lower and an upper offline limit, then these may be used by the offline only terminal 102. Specifically, if the offline only terminal 102 determines these offline limits, then it will perform a get data operation on the Application Transaction Counter (ATC) and the last online ATC and compute the difference. The offline only terminal 102 then determines if the limits are exceeded and takes action according to the IACs. This mechanism can be used for contact devices and for contactless devices. The kernel's behaviors may be changed or modified as required.

The last online ATC is a value that may be read from the card; the message that is MAC'd would cause the last online ATC to be set and, if the message also includes a new signed record, it can also change the limits for subsequent offline transactions.

At step 411, the telecommunication module 206 receives a message authentication code (MAC) of the data permitting overriding of issuer action codes (IACs) from the computer system 600.

At step 412, the MAC received at either step 409 or step 411 is validated by the transaction authorisation module 212. If the MAC is successfully validated, step 414 is carried out. If the MAC is not successfully validated, step 413 is carried out and the transaction process is ended. An alert indicating that the validation of the MAC was unsuccessful may be returned to the computer system 600. A notification of the failure may also be presented to the user via the GUI.

At step 414, the approval certificate generating module 208 generates an approval certificate (such as a transaction certificate (TC)) for an offline transaction based on the data received at step 408 or 410.

At step 415, the terminal communication module 210 sends the approval certificate for an offline transaction to the offline only terminal 102 to complete the transaction. The mobile device is either still in communication with the offline only terminal 102 or the user is informed, via the GUI, that they may now again connect the mobile device 200 with the offline only terminal 102 so that the approval certificate for an offline transaction can be sent to the offline only terminal 102.

In other words, the user may hold the mobile device 200 in the vicinity of the offline only terminal 102 for the entire process, such that it is connected to the offline only terminal 102 for the duration of the process.

Alternatively, the user taps the mobile device 200 at the offline only terminal 102 to connect the mobile device 200 to the offline only terminal 102 in order to perform step 401, disconnects the mobile device 200 from the offline only terminal 102 while steps 402 to 414 are carried out, then the user reconnects the mobile device 200 with the offline only terminal 102, for example, by tapping the mobile device 200 at the offline only terminal 102, such that step 415 can be carried out.

The precise nature of the user interaction will be determined by the version of software running both on the offline only terminal 102 and the mobile device 200. It will be understood that instructions can be sent to the user via the GUI of the mobile device 200, for example, when the mobile device 200 is to be tapped at the offline only terminal 102.

At step 416, the transaction process is ended and, if received at step 408, the RSA key and/or temporary ICC public key certificate are deleted from the mobile device 200.

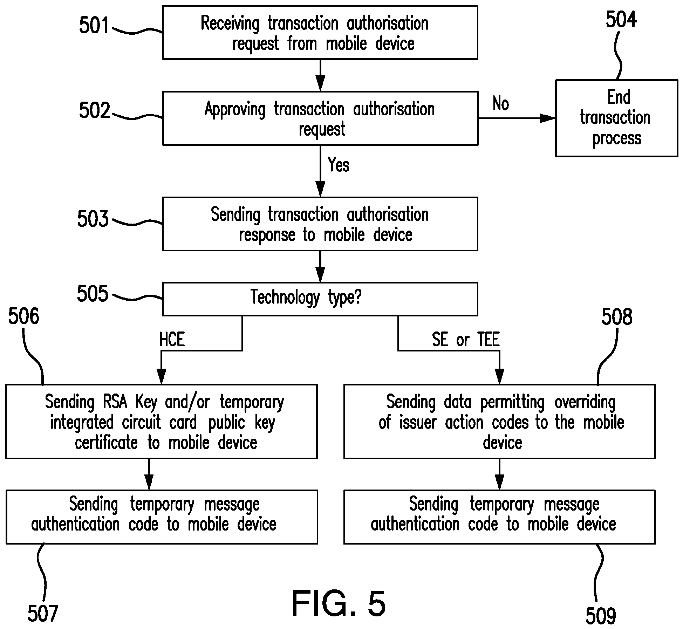

Figure 5 is a process flow diagram which depicts steps carried out at the computer system 600 in the embodiments of Figures 3 and 4.

At step 501, the computer system telecommunication module 606 receives a transaction authorisation request from a mobile device 200.

At step 502, the transaction authorisation request approving module 608 approves the transaction authorisation request using, for example, the processes of conventional card schemes.

If the computer system 600 is an issuer computer system directly in communication with the mobile device 200, approval is carried out at the computer system 600.

If the computer system 600 is an intermediary computer system which is in further communication with an issuer computer system, the transaction authorisation request approving module 608 communicates with the issuer computer system in order to obtain approval of the transaction authorisation request. In this instance, the transaction authorisation request may be sent to the issuer computer system by the computer system 600 for approval at the issuer computer system.

If the approval is successful, step 503 is carried out. If the approval is unsuccessful, step 504 is carried out and the transaction process is terminated.

At step 503, the computer system telecommunication module 606 sends a transaction authorisation response to the mobile device 200.

At step 505, if the technology used by the mobile device 200 is HCE based, steps 506 and 507 are carried out. If the technology used by the mobile device 200 is SE or TEE based, steps 508 and 509 are carried out. Other technologies may use similar steps, any one of the SE/TEE or HCE based steps, or a combination of one or more of the SE/TEE or HCE based steps.

At step 506, the computer system telecommunication module 606 sends an RSA key and/or a temporary ICC public key certificate to the mobile device 200.

At step 507, the computer system telecommunication module 606 sends a MAC of the RSA key and/or the temporary ICC public key certificate to the mobile device 200, for use by the mobile device 200 to complete the offline transaction.

At step 508, the computer system telecommunication module 606 sends data permitting overriding of issuer action codes to the mobile device 200.

There are two sets of issuer action codes which may be overridden, the "Issuer Action Codes" that are part of the certificate for all SE/HCE/TEE cases and the "Card Issuer Action Codes" which control what the SE/TEE/HCE applications do. Either or both of these may be overridden.

At step 509, the computer system telecommunication module 606 sends a MAC of the data permitting overriding of issuer action codes to the mobile device 200, for use by the mobile device 200 to complete the offline transaction.

Any of the herein described communications between the various modules of the system described herein may be encrypted and decrypted using conventional encryption methods, as would be understood by the skilled person.

The process flow charts and descriptions thereof herein should not be understood to prescribe a fixed order of performing the method steps described therein. Rather, the method steps may be performed in any order that is practicable.

Generally, any of the functionality described in this text or illustrated in the figures can be implemented using software, firmware (e.g., fixed logic circuitry), programmable or nonprogrammable hardware, or a combination of these implementations. For example, the modules described herein could be logical, virtual or physical entities. They could also be implemented in software or hardware.

Methods and processes described herein can be embodied as code (e.g., software code) and/or data. Such code and data can be stored on one or more computer-readable media, which may include any device or medium that can store code and/or data for use by a computer system.

Mobile devices can include, without limitation, mobile user devices such as smartphones, tablets, laptops and smartwatches.

## Claims

1. A method, at a mobile device, of interacting with an offline only terminal, the method comprising the steps of:
generating an authorisation request;
sending the authorisation request to a remote computer system via a telecommunications network;
receiving an authorisation response from the remote computer system, via a telecommunications network, the authorisation response comprising data for enabling generation of an approval certificate for an offline operation;
receiving a request for the approval certificate for an offline operation from the offline only terminal;
generating an approval certificate for an offline operation based on the data; and
sending the approval certificate for an offline operation to the offline only terminal.

2. The method of claim 1, wherein the data permits the generation of the approval certificate for an offline operation for a predetermined period of time and/or in relation to predetermined categories of operations and/or in relation to a predetermined maximum number of operations.

3. The method of any preceding claim, wherein the data permits overriding of issuer action codes at the mobile device, wherein the step of generating the approval certificate for an offline operation comprises overriding issuer action codes at the mobile device so as to enable the approval certificate for an offline operation to be generated.

4. The method of any preceding claim, wherein the data permits counters and/or accumulators of the mobile device to be overwritten.

5. The method of any preceding claim, wherein the data comprises a temporary RSA key and/or a temporary integrated circuit card public key certificate for generating the approval certificate for an offline operation, wherein the step of generating the approval certificate for an offline operation comprises generating the approval certificate for an offline operation using the temporary RSA key and/or the temporary integrated circuit card public key certificate.

6. The method of any preceding claim, wherein the step of generating an authorisation request is performed before the request for the approval certificate for an offline operation is received.

7. The method of any of claims 1 to 5, wherein the step of generating an authorisation request is performed after the step of receiving a request for the approval certificate for an offline operation from the offline only terminal.

8. The method of claim 7, wherein the authorisation request is generated based on the received request for the approval certificate for an offline operation.

9. The method of any preceding claim, wherein the mobile device remains connected to the offline only terminal while the steps of receiving a request for the approval certificate for an offline operation from the offline only terminal and sending the approval certificate for an offline operation to the offline only terminal are carried out.

10. A method, at a computer system, of enabling a mobile device interaction with an offline only terminal, the method comprising the steps of:
receiving an authorisation request from a remote mobile device, via a telecommunications network;
approving the authorisation request; and
sending an authorisation response to the remote mobile device, via a telecommunications network, the authorisation response comprising data for enabling generation of an approval certificate for an offline operation.

11. The method of claim 10, wherein the data comprises a temporary RSA key and/or a temporary integrated circuit card public key certificate for generating the approval certificate for an offline operation.

12. The method of claim 10, wherein the data permits overriding of issuer action codes at the remote mobile device.

13. The method of any of claims 10 to 12, wherein the step of approving the authorisation request comprises communicating with an issuer computer system in order to obtain approval.

14. A mobile device comprising:
a memory;
a processor;
an authorisation module configured to generate an authorisation request and process an authorisation response;
a telecommunication module configured to send the authorisation request to a remote computer system and to receive the authorisation response from the remote computer system, the authorisation response comprising data for enabling generation of an approval certificate for an offline operation;
a terminal communication module configured to receive a request for an approval certificate for an offline operation from an offline only terminal and to send an approval certificate for an offline operation to the offline only terminal; and
an approval certificate generating module configured to process the request for an approval certificate for an offline operation and generate the approval certificate for an offline operation based on the data.

15. A telecommunication system comprising:
the mobile device of claim 14; and
a computer system remote from the mobile device, the computer system comprising:
a computer system telecommunication module configured to receive an authorisation request from a mobile device and to send an authorisation response to the mobile device comprising data for enabling generation of an approval certificate for an offline operation; and
an authorisation request approving module for approving, or obtaining approval of, the authorisation request.
